(19) Europäisches Patentamt / European Patent Office / Office européen des brevets

(11) **EP 2 391 020 B1**

(12) **EUROPEAN PATENT SPECIFICATION**

(45) Date of publication and mention of the grant of the patent:
**13.11.2019 Bulletin 2019/46**

(21) Application number: **09838685.7**

(22) Date of filing: **31.12.2009**

(51) Int Cl.:
*H04L 1/06* (2006.01)    *H04L 1/00* (2006.01)
*H03M 13/37* (2006.01)    *H04B 7/04* (2017.01)

(86) International application number:
**PCT/CN2009/076351**

(87) International publication number:
**WO 2010/083718 (29.07.2010 Gazette 2010/30)**

(54) **METHOD AND DEVICE FOR EFFICIENT MULTI-USER MULTI-VARIANT PARALLEL TRANSMISSION**

VERFAHREN UND EINRICHTUNG FÜR EFFIZIENTE MEHRBENUTZER-MEHRVARIANTEN-PARALLELÜBERTRAGUNG

PROCÉDÉ ET DISPOSITIF POUR UNE TRANSMISSION EN PARALLÈLE À PLUSIEURS VARIANTES MULTI-UTILISATEURS EFFICACE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.01.2009 CN 200910103092**

(43) Date of publication of application:
**30.11.2011 Bulletin 2011/48**

(73) Proprietor: **Woasis Telecomm. Co., Ltd.**
**ChongQing, Sichuan 401121 (CN)**

(72) Inventors:
• **MA, Xinrui**
  **ChongQing, Sichuan 401121 (CN)**
• **DUAN, Shiping**
  **ChongQing, Sichuan 401121 (CN)**
• **XIAO, Yeping**
  **ChongQing, Sichuan 401121 (CN)**

(74) Representative: **Stuttard, Garry Philip**
**Urquhart-Dykes & Lord LLP**
**Arena Point**
**Merrion Way**
**Leeds LS2 8PA (GB)**

(56) References cited:
EP-A1- 1 852 993    WO-A1-2008/045001
WO-A2-2008/082277    CN-A- 101 147 351
CN-A- 101 170 530    CN-A- 101 515 844
CN-A- 101 521 514

• **RONG-HUI PENG ET AL: "Design of Nonbinary LDPC Codes over GF(q) for Multiple-Antenna Transmission", MILCOM 2006, 1 October 2006 (2006-10-01), pages 1-7, XP055098640, DOI: 10.1109/MILCOM.2006.302526**
• **COLAVOLPE G ET AL: "On the Application of Factor Graphs and the Sum-Product Algorithm to ISI Channels", IEEE TRANSACTIONS ON COMMUNICATIONS, IEEE SERVICE CENTER, PISCATAWAY, NJ. USA, vol. 53, no. 5, 1 May 2005 (2005-05-01), pages 818-825, XP011132135, ISSN: 0090-6778, DOI: 10.1109/TCOMM.2005.847129**
• **PENG R.-H. ET AL.: 'Design of nonbinary LDPC codes over GF(q) for multiple-antenna transmission' PROC. MILITARY COMMUNICATIONS CONFERENCE 25 October 2006, pages 1 - 7, XP055098640**

**Description**

FIELD OF THE INVENTION

The present invention relates to a multi-ary parallel transmission technology for wireless communication systems, in particular, to a multi-ary coded modulation transmission technology which combined with multi-ary codes based on factor graphs, more particularly, to a method and a device for multi-user multi-ary codes parallel transmission based on the said multi-ary coded modulation.

BACKGROUND OF THE PRESENT DISCLOSURE

One of the most important issues in the new generation wireless communications systems is to improve transmission efficiency and reliability of systems under the limited bandwidth and power.

Coded modulation technology has been always being a hot research field since the proposal of TCM by Ungerboeck in 1982. Since the required coding gains are obtained by combining channel coding with modulation under the premise of not extending bandwidth, joint design of TCM and coded modulation has been a key field of research in communication, particularly wireless communication, which requires high spectral efficiency. Trellis-coded modulation (TCM) in AWGN channel which is proposed by Ungerboeck can obtain 3-6 dB coding gain under the same information rate and without increasing bandwidth and power. Ungerboeck also gave the definition of Euclidean space metrics of good TCM codes in AWGM channel, which is different from the traditional use of Hamming distances as criteria of good codes. Block coded modulation (BCM) based on the same idea uses block codes to replace convolutional codes in TCM.

However, the noteworthy performance of TCM is embodied in Gaussian channels. While in multipath fading channels, the performance of TCM is inferior to bit-interleaved coded modulation (BICM), another widely applied coded modulation. The working principle of BICM is simple. Coded streams of bits run through the bit interleaver, and then are mapped to modulation constellation points by sequence. Here, Gray map is adopted for constellation map. The bit interleaver can be elaborately designed, but a random interleaver is sufficient to secure satisfactory performance. Advantages of BICM include: 1) BICM seeks maximized Hamming distances at the cost of some Euclidean distance characteristics, which makes maximum code subsets and high robustness in Rayleigh fading channels; 2) in the case of ideal interleaving, the separation of coder and modulator realizes high flexibility of design. At present, most wireless communications system, such as those of 2G, 3G and WiMax, use BICM and coded evolution methods developed on BICM.

The mainstream channel codes used in present system are binary codes, such as Turbo codes and LDPC codes. In combination with high order modulation, since bit correlation exists when coded bits are mapped to modulation symbols, information may be lost when bit likelihood information is obtained during demodulation. This is an inherent defect of binary codes. Use of methods, such as iterative demodulation and decoding, may partially offsets the loss by increasing complexity and processing time delay.

Multiple-input-multiple-output (MIMO), as an important method for improving frequency spectrum efficiency and transmission reliability, has been increasingly used in wireless communication systems to a wide extent. In MIMO multiplexing (e.g. V-BLAST), each antenna at the transmission end sends independent data, and data received at each antenna at the receiving end is the superposition of all data from the transmission end at the same time. And the receiving end uses a certain receiving method which can demodulate data. In this manner, the capability of channels can be significantly increased, along with increase of the number of antennas. However, the precondition is that channel conditions are favorable and the spatial channel correlation of MIMO is small.

In 1993, the introduction of Turbo codes gave raise to revolutionary changes in the field of channel coding, and iterative decoding became the mainstream approach. In 1996, LDPC codes were re-recognized. The use of BP decoding algorithm of soft information iteration gave better performance than that of Turbo codes. However, encoding complexity of LCPC codes is high, and the performance of LDPC codes with fast decoding structure is no superior to that of Turbo. Moreover and more importantly, the excellent Near Shannon Limit performance of these two types of codes can only be obtained in the case of long code blocks. While in the case of short blocks, or medium or high code rates, the performance of BICM which is combined with Turbo codes or LDPC codes is unsatisfactory.

Both binary Turbo codes and LDPC codes can be presented with factor graphs, and decoded with the binary BP (belief propagation) algorithm. While graph structures of multi-ary codes which based on factor graphs, such as multi-ary LDPC codes, multi-ary LDGM codes, and multi-ary RA/iRA codes, are similar to those of binary codes. The difference lies in that different paths correspond to different non-zero factors. The BP algorithm may also be used to decode multi-ary codes on factor graphs. In the case of short- and medium-length blocks, multi-ary codes based on factor graphs have better performance than that of binary codes. Multi-ary codes are used hereinafter to refer to multi-ary codes based on factor graphs.

To use multi-ary coded modulation combining multi-ary codes and high order modulation, as shown in Reference [3], the receiving end only requires symbol information rather than bit likelihood information; therefore there is no information loss. Further more, as shown in Reference [4], a multi-ary code coding symbol (such as a GF (256) coding symbol) is mapped to 2 modulation symbols (such as 16QAM modulation), and is transmitted with 2 antennas; the receiving end directly get the soft information of the GF (256) coding symbol with the composite signal at each receiving antenna for multi-ary decoding. Compared with BICM, in the fading channel, because the performance gain from optimal detection can offset the time diversity loss caused by non-bit-interleaving, this makes this option have low detection time delay without loss of optimality. Moreover the Hamming distance of multi-ary codes directly correspond to the Hamming distance between signal sequences, which is beneficial to design of coded modulation systems with favorable product distances. Existing results prove that the coded modulation technology which is combined with multi-ary codes, high order modulation and multi-ary codes, high order modulation and multiple antennas has good performance in both AWGN and fading channels. WO-A-2008/045001 discloses a method for data transmission in a multiple input multiple output (MIMO) system which comprises: receiving multiple input data streams and performing low density parity check (LDPC) encoding of the input data streams utilising a parity check matrix. The parity check matrix comprises a plurality of sub-parity check matrices for encoding respective ones of the input data streams and performing space time encoding for transmitting the LDPC encoded input data streams over a plurality of antennas.

Related references:

[1] G. Caire, G. Taricco and E. Biglieri, "Bit-Interleaved Coded Modulation," IEEE Trans. Inf. Theory, VOL. 44, NO. 3, May 1998.
[2] M.C. Davey and D. Mackay, "Low-density parity check codes over GF (q)," IEEE Commun. Lett., VOL. 2, PP. 165-167, June 1998.
[3] X. Li, M. R. Soleymani, J. Lodge, and P. S. Guinand, "Good LDPC codes over GF (q) for bandwidth efficient transmission," SPAWC 2003, pp. 95-99, June 2003.
[4] R. Peng and R.-R. Chen, "Design of nonbinary LDPC codes over GF(q) for multiple-antenna transmission", MILCOM'06, Washington DC, Nov. 2006.
[5] D. Declercq and M. Fossorier, "Decoding Algorithms for Nonbinary LDPC Codes over GF (q)", IEEE Trans. On Comm. Vol. 55, pp.633-643, April 2007.

WO 2008/082277 A2 describes a method for indicating a combination between a codeword and a layer in a MIMO communication, system, a layer mapping method, and a data transmission method using the same. A minimum number of codeword- layer mapping combinations from among all available combinations based on the numbers of all codewords and all layers are pre-defined in consideration of a ratio of a codeword to a layer, a reception performance of a receiver, and reduction of combinations, so that a data transmission method using the predefined combinations is implemented. If a specific one code word is mapped to at least two layers, a diversity gain can be acquired.

DISCLOSURE OF THE INVENTION

The object of the present invention is to provide a method and a device for multi-user multi-ary parallel transmission for wireless communication systems.
According to an aspect of the invention, there is provided a method for multi-user multi-ary parallel transmission, comprising the following steps:

Galois Field, GF, (qi) multi-ary coding $q_i$-ary symbols in the i-th channel of data among m-channel user data to obtain multi-ary-coded $q_i$-ary symbols, wherein, $q_i = 2^{p_i}$, $1 \leq i \leq m$, and $m > 1$;
partitioning and mapping $p_i$ bits corresponding to the multi-ary-coded $q_i$-ary symbols to obtain $k_i$ layer bit stream for the i-th channel of data, wherein the j-th layer bit stream contains $p_{ij}$ bits, and $1 \leq j \leq k_i$ and $\sum_{j=1}^{k_i} p_{ij} = p_i$;
modulating and mapping $p_{ij}$ bits which are mapped to the j-th layer bit stream to constellation points, to obtain a user data block for the i-th channel of data, wherein the number of modulated constellation points is $c_{ij} = 2^{p_{ij}}$, and $L = \sum_{i=1}^{m} k_i$,
at the same time, data blocks of m users are mapped to L layers by a layer-mapping module, wherein and L modulation symbols are obtained after modulation;

pre-coding the L symbols on dimensions of $N_t \times L$ to output $N_t$ symbols to ports of corresponding $N_t$ transmission antennas.

A method for the multi-user multi-ary code parallel transmission that is not an embodiment of the claimed invention comprises:

GF multi-ary coding corresponding one-channel of data symbols among m -channel user data symbols, to obtain m channels of multi-ary symbols;

Partitioning and mapping multiple bits corresponding to each channel of multi-ary symbols among the said m-channel multi-ary symbols to obtain a multi-layer bit stream, so as to obtain m multi-layer bit streams;

Modulating and mapping each multi-layer bit stream among the m multi-layer bit streams to corresponding constellation points, as to obtain L modulation symbols for m users, wherein, $L = \sum_{i=1}^{m} k_i$ , and $K_i$ is the i-th multi-layer among the m multi-layers;

Pre-coding the said L symbols on dimensions of $N_t \times L$ to output $N_t$ symbols to ports of corresponding $N_t$ transmission antennas.

In one embodiment, $p_i$ bits corresponding to $q_i$-ary symbols after coding are partitioned and mapped to obtain $k_i$ layer of bit stream, comprising following steps:

p bit vectors presented with $b_1 b_2 \cdots b_p$ bit vectors of each q-ary symbol are partitioned into k layers of bit streams; the bit stream on the j-th layer is $b_{\sum_{s=1}^{j} p_s - p_j + 1} b_{\sum_{s=1}^{j} p_s - p_j + 2} \cdots b_{\sum_{s=1}^{j} p_s}$ , $1 \leq j \leq k$, and they are respectively mapped to corresponding layers.

In one embodiment, for the $p_j$ bits which are mapped to each layer, an appropriate mapping rule is selected to modulate and map the $p_j$ bits to constellations of $c_j = 2^{p_j}$ dimensions.

In one embodiment,, the appropriate mapping rules include:

each constellation point on the constellation diagram and all its adjacent constellation points are multiplied by all non-zero elements on GF (q) to calculate the distance between them.

All possible mapping relationships may be traversed to the greatest extent, to select the relationship with the longest distance as the final mapping rule.

According to another aspect of the invention, there is provided a device for multi-user multi-ary parallel transmission, comprising:

multiple Galois Field, GF, multi-ary coding means, each of which conducts Galois Field, GF, multi-ary coding for corresponding one-channel multi-ary symbols among m-channel user data, to obtain m-channel multi-ary-coded multi-ary symbols;

multiple partitioning and layer-mapping means for multi-ary symbols, each of which receives one-channel multi-ary-coded multi-ary symbols among the multi-ary-coded m-channel multi-ary symbols which have undergone multi-ary coding from the corresponding Galois Field, GF($g_i$), multi-ary coding means, and partitions and maps multiple bits corresponding to the one-channel multi-ary-coded symbols to obtain a multi-layer bit stream for the one-channel and thus to obtain m multi-layer bit streams;

multiple multi-dimensional modulation means which are used to modulate and map each multi-layer bit stream among the m multi-layer bit streams to corresponding constellation points, as to obtain L modulation symbols for m users, wherein, $L = \sum_{i=1}^{m} k_i$ , and $K_i$ is the i-th multi-layer of m multi-layers;

pre-coding means which are used to conduct $N_t \times L$ dimension pre-coding of the L symbols to output $N_t$ symbols to ports of corresponding $N_t$ transmission antennas.

In one embodiment, each partitioning and layer mapping means for multi-ary symbols realizes partitioning and layer mapping of multi-ary symbols through the following means:

p bit vectors presented with $b_1 b_2 \cdots b_p$ bit vectors for each multi-ary symbol are partitioned into k layers of bit streams;

the bit stream on the j-th layer is $b_{\sum_{s=1}^{} p_s-p_j+1}\ b_{\sum_{s=1}^{} p_s-p_j+2}\ \cdots b_{\sum_{s=1}^{} p_s}$, $1 \leq j \leq k$, and they are respectively mapped to corresponding layers.

According to a further aspect of the invention, there is provided a wireless communication method for multi-user multi-ary parallel transmission and reception comprising:

performing the multi-user multi-ary parallel transmission method of any of claims 1 to 4; and
further comprising the following steps:

a receiver receiving the i-th user data signal in the m-channel user data signals via Ni receiving antennas, wherein, $1 \leq i \leq m$;
after the i-th user data received is synchronized and balanced, the signal entering a multiple-input-multiple-output (MIMO) detection module for separation of overlapping signals and soft symbol decoding, to obtain the $q_i$-ary symbol likelihood information and take other channels of data as interference;
demapping $q_i$-ary symbol on the $q_i$-ary likelihood information to obtain input symbol likelihood information required for multi-ary decoding;
decoding the likelihood information of the required input to obtain $q_i$-ary symbols; and
converting the $q_i$-ary data symbols to corresponding data bits.

According to another aspect of the invention, there is provided a wireless communication system comprising:

the device for multi-user multi-ary parallel transmission of any of claims 5 to 7; and
a device for multi-user multi-ary parallel receiving, comprising:

antennas for receiving the i-th user data signal in the m-channel user data signals, wherein, $1 \leq i \leq m$;
means for synchronizing and balancing of the received i-th user data;
means for processing of separation of overlapping signals and symbol soft demodulating of the synchronized and balanced i-th user data , to obtain the $q_i$-ary symbol likelihood information and takes other channels of data as interference;
means for de-mapping $q_i$-ary symbol on the $q_i$-ary likelihood information to obtain the input symbol likelihood information required for multi-ary decoding;
means for decoding the likelihood information of the required input symbols to obtain $q_i$-ary symbols; and
means for converting the $q_i$-ary data symbols into corresponding data bits.

In one embodiment, each of the coding means of the multiple GF multi-ary coding devices conducts GP multi-ary coding for corresponding one-channel of data symbols among the m-channel user data symbols in multiple cells, and the $N_t$ transmission antennas are obtained by combining antennas of multiple cells for transmission.

Moreover, the scenario of one user and one-layer data is the simplest scenario of the present invention.

Another scenario of the present invention comprises one user and multi-layer data.

Use of the methods and devices of the present invention can not only increase the user data rate, but also avoid interference between cells, and thus increase the system capacity.

The following figures are used to give detailed description of the details and working principles of the present invention.

BRIEF DESCRIPTION OF THE DRAWINGS

Figure 1 is a diagram of a QCM Transmission Means;
Figure 2 is a diagram of Partitioning and Layer-Mapping of Multi-ary Symbols;
Figure 3 is a diagram of 16QAM Constellation Diagram and Various Mapping Rules;
Figure 4 is a diagram of QCM Receiving Means;
Figure 5 is a diagram of QCM Transmission Means based on an MIMO+OFDM (A) System;
Figure 6 is a diagram of QCM Receiving Means based on an MIMO+OFDM (A) System.

DETAILED DESCRIPTION

The MIMO+OFDM (A) technology plays an increasingly important role in the next generation of wireless communication systems. A 3GPP LTE system based on the MIMO+OFDMA technology is used to detail the basic principles, mathematic description and details of implementation of the present invention.

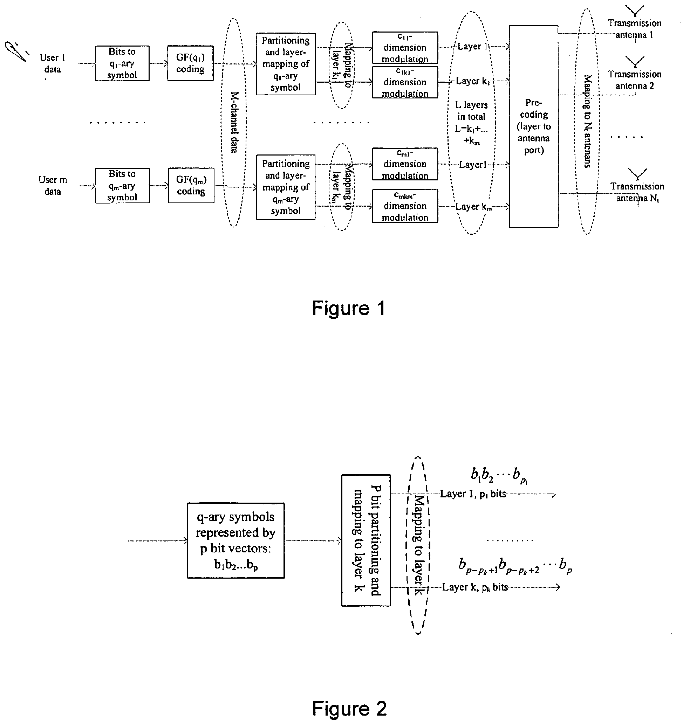

Figure 1 illustrates the QCM transmission framework.

Assume that m users are sending data at the same time, and each user corresponds to a channel of data. For the i-th channel of data, GF ($q_i$) multi-ary coding is used, wherein, $q_i = 2^{p_i}$, $1 \leq i \leq m$. The $p_i$ bits corresponding to he $q_i$-ary symbols after coding are partitioned and mapped to obtain the bit stream of layer $k_i$. The j-th level includes $p_{ij}$ bits,

$$\sum_{j=1}^{k_i} p_{ij} = p_i$$

wherein, $1 \leq j \leq k_i$, (See Figure 2 for details on symbol partitioning and lay-mapping). The $p_{ij}$ bits which have been mapped to the j-th layer are modulated and mapped to constellation points, and the number of modulated constellation points is $c_{ij} = 2^{p_{ij}}$. At the same time, the data of m users is jointly mapped to layer L through the layer-

$$L = \sum_{i=1}^{m} k_i .$$

mapping module, wherein, L modulated symbols are obtained after modulation and then go through precoding at the dimension of $N_t \times L$. $N_t$ symbols are outputted to ports of $N_t$ transmission antennas.

Figure 2 gives details of the processing of multi-ary symbol partitioning and layer-mapping. According to the high-order domain elements in Table 1, each q-ary symbol can be represented with p bit vectors $b_1 b_2 \cdots b_p$, which are

$$b_{\sum_{s=1}^{} p_s - p_j + 1} \quad b_{\sum_{s=1}^{} p_s - p_j + 2} \quad \cdots b_{\sum_{s=1}^{} p_s} \quad , \quad 1 \leq j \leq$$

partitioned into k layers of bit streams; the bit stream on the j-th layer is k, and they are respectively mapped to corresponding layers.

Table 1. GF(16) Elements Generated with $p(X) = 1 + X + X^4$

| No. of GF(16) Element | Representation of bits |
|:---:|:---:|
| 0 | 1000 |
| 1 | 0100 |
| 2 | 0010 |
| 3 | 0001 |
| 4 | 1100 |
| 5 | 0110 |
| 6 | 0011 |
| 7 | 1101 |
| 8 | 1010 |
| 9 | 0101 |
| 10 | 1110 |
| 11 | 0111 |
| 12 | 1111 |
| 13 | 1011 |
| 14 | 1001 |
| 15 | 0000 |

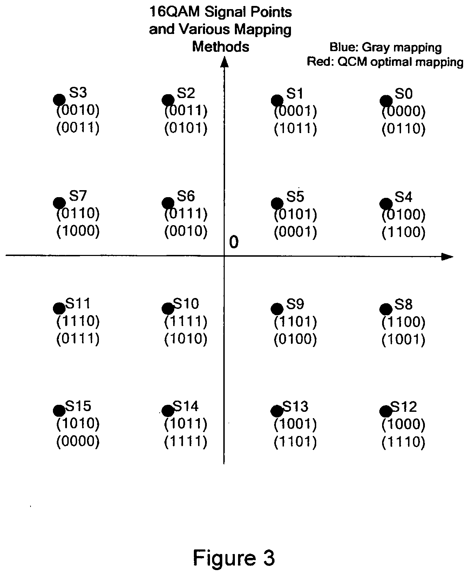

The $p_j$ bits which have been mapped to each layer are modulated and mapped to constellation points on the dimension of $c_j = 2^{p_j}$. A regular method is using the Gray mapping. Figure 3 illustrates the constellation and Gray mapping of 16QAM. However, Gray mapping is only optimal for bit error rates (BER), and not for block error rates as that in this scenario. Figure 3 also gives another better mapping rule, whose selection is described below.

The check relationship of multi-ary factor graphs can be represented by a number of check equations as follows:

$$(h_1 \otimes E_1) \oplus (h_2 \otimes E_2) \cdots \oplus (h_k \otimes E_k) = \sum_{i=1}^{k} h_i \otimes E_i = 0 \qquad (1)$$

In Formula (1), the addition and multiplication operations are based on GF (q); $h_i$ represents the non-zero element of the corresponding side on the factor graph; $E_i$ represents the element variable of the side; for any side in the check equation, assume it is $h_1$, the formula (1) can be simplified as follows:

$$(h_1 \otimes E_1) \oplus S = 0 \rightarrow h_1 \otimes E_1 = S \qquad (2)$$

S represents any element in GF (q), which is equivalent to the check sum of other k-1 sides. Corresponding to the constellation diagram, $E_1$ corresponds to a constellation point on the signal constellation diagram at the transmission end. Due to the impact of channels and noise, $E_1$ deviates from the reference constellation point at the receiving end. The farther the product of all constellation points adjacent to $E_1$ multiplied by $h_1$ is from S, the higher the probability of correct decoding is. Displayed on the constellation diagram, that is all constellation points adjacent to $E_1$ multiplied by $h_1$ (a non-zero element) is far from S to the greatest extent, and the distance from the constellation point to the S is recorded as D. The farther the distance is, the greater D is.

To define the product distance *PD*, which indicates the sum of all possible Ds, and the criterion for judging mapping rule is the size of its product distance. The larger the product distance, the better the QCM scheme under mapping rule.

To be more specific, for $p_j$ bits which are mapped to some layer, a $c_j = 2^{p_j}$ dimensions constellation diagram is selected. For example, if $p_j = 4$, a 16QAM constellation diagram is used. The 16QAM constellation diagram in Figure 3 is taken as the example used below.

1. A mapping rule is given randomly;
2. *PD* is initialized, wherein, *PD* = 0;
3. All possible mapping relationships are traversed to the greatest extent, to select the one with the longest product distance as the final mapping rule.

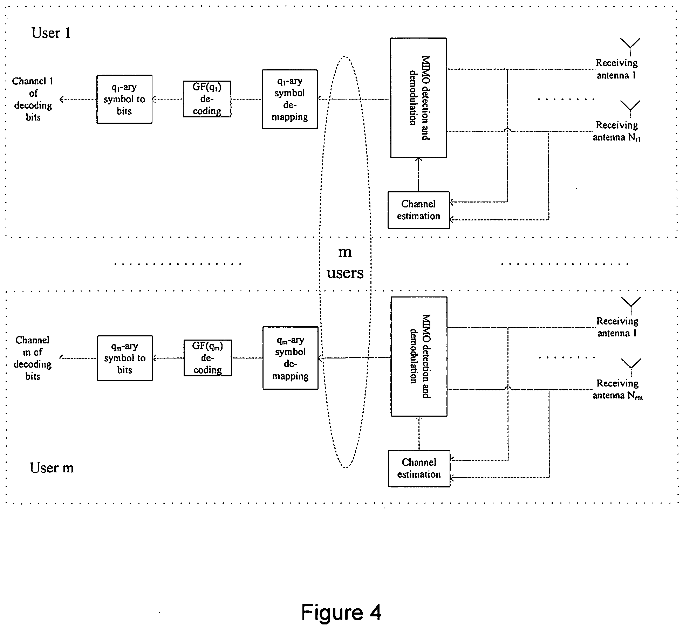

Figure 4 illustrates the receiving framework of QCM, and only related MIMO modules such as detection and decoding are given here, other modules such as synchronization and balancing are not marked. Assume that the i-th user terminal has $N_{ri}$ receiving antennas, $1 \leq i \leq m$, and each terminal of which work independently. Only receiving by the i-th user is described below, and processing at other users are similar.

After synchronization and balancing, signals enter the MIMO detection module for separation of overlapping signals, symbol soft modulation, etc. During MIMO detection, the receiver takes other channels of data as interference, and only demodulates the i-th channel of signals. Through pre-coding, pre-deletion of interference at the transmittion end or interference suppression at the receiving end, etc, the impact of interference signals entering the MIMO detection module can be within the acceptable extent.

By removing other user interference, multipath disturbance and other losses, the transmutation signals and receiving signals at a point of time can be represented in the following manner:

$$\begin{bmatrix} y_1 \\ \vdots \\ y_{N_{ri}} \end{bmatrix} = \begin{bmatrix} h_{11} & \cdots & h_{1k_i} \\ \vdots & \ddots & \vdots \\ h_{N_{ri}1} & \cdots & h_{N_{ri}k_i} \end{bmatrix} \begin{bmatrix} x_1 \\ \vdots \\ x_{k_i} \end{bmatrix} + \begin{bmatrix} n_1 \\ \vdots \\ n_{N_{ri}} \end{bmatrix} \rightarrow Y_i = H_i X_i^T + N_i^T \qquad (3)$$

$X_i$ represents the transmission signal vector of layer $k_i$ for the i-th channel of data. $Y_i$ represents the signal vectors to be demodulated after processing received by $N_{ri}$ antennas. $H_i$ represents the equivalent estimated MIMO channels. $N_i$ represents equivalent noise vector.

The optimal MIMO symbol detection algorithm is the maximum likelihood method, that is, to traverse all possible overlapping signal points $X_i^j, 1 \le j \le 2^{\sum_{s=1}^{k_i} p_{is}} = 2^{p_i} = q_i$ combined by $k_i$ modulation signals, to obtain the Euclidean distance $Ed_j$ from each overlapping signal point to $Y_i$:

$$Ed_j = \left\| Y_i - H_i X_i^j \right\|^2$$

The Euclidean distances of all points are used to obtain the likelihood information of symbols.

Sphere decoding is a simple-state algorithm which only searches for the overlapping signal points with the minimal Euclidean distances, and its complexity depends on the radius of search. Sphere decoding algorithm can always find the maximal likelihood signals rather than accurate likelihood information of all symbols.

MMSE is another detection algorithm with low complexity, its principle is maximization of signal to interference plus noise ratio (SINR). Because MMSE is a linear detection algorithm, its performance has certain loss.

Different multi-ary decoding algorithms require input of different types of symbol likelihood information. The use of the BP algorithm or the FFT-BP algorithm requires input of all normalization symbol probability information of symbol variables. The use of the Log-FFT-BP algorithm or the minimal sum (MS) algorithm requires input of the logarithm likelihood ratio information of symbol variables. The use of the expanded minimal sum (MS) algorithm requires only input of logarithm likelihood ratio information of partial symbol variables.

However, whatever the decoding algorithm is, the symbol likelihood information entering the decoder is based on the Euclidean distance $Ed_j$ described above.

Due to the symbol partitioning and layer-mapping at the transmission end, data after MIMO demodulation has to be inversely transformed at the receiving end, i.e. multi-ary symbol demapping, to obtain the symbol soft information corresponding to coding symbols.

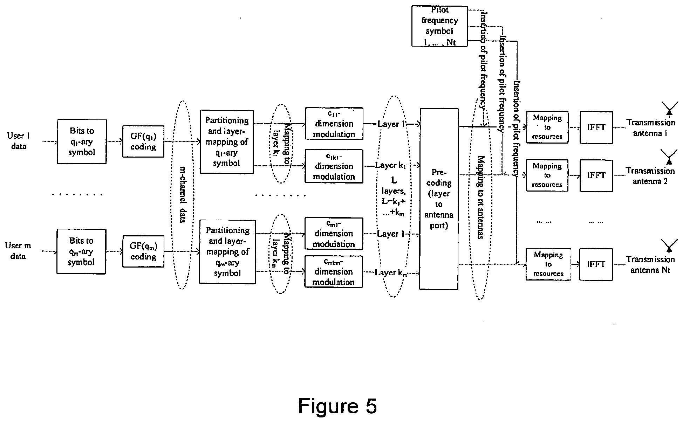

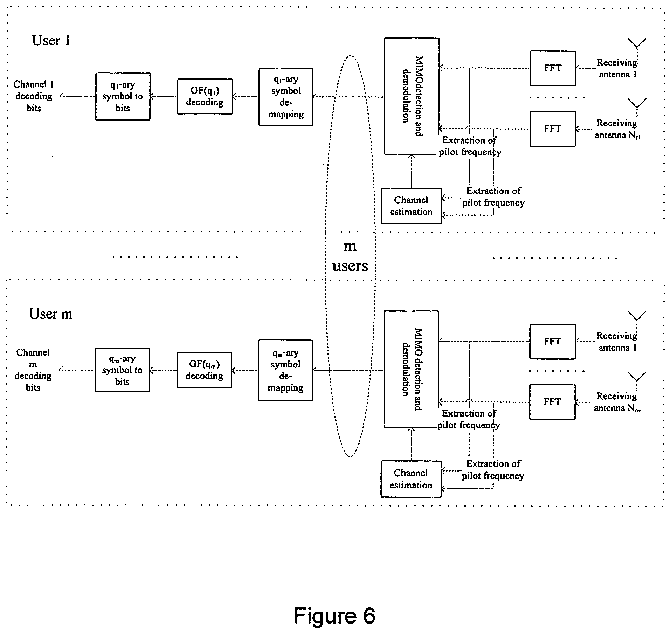

Figure 5 and Figure 6 gives the QCM transmission and receiving frameworks based on MIMO+OFDMA systems.

For user 1, assume that $q_1$ = 16, $k_1$ = 1. Therefore, each code symbol has $p_1$ = 4 bits of information and is mapped to 1 layer, and 16QAM modulation is adopted.

For user 2, assume that $q_2$ = 64, $k_2$ = 2, $p_{21}$ = 2, $p_{22}$ = 4. Therefore, each code symbol has $p_2$ = 6 bits of information and ismapped to 2 layers, QPSK modulation for layer 1 and 16QAM modulation for layer 2 are adopted.

The maximum product distance mapping proposed by the present invention is used for modulation. If the regular Gray mapping is adopted, the BLER performance may be slightly impaired.

Therefore, the total number of mapping layers L is 3. Assume that the number of transmission antennas $N_t$ is 4,, 3×4 pre-coding matrix P is adopted, and the 0-th code word in the corresponding codebook of the LTE standard is used, i.e.:

$$P = 0.288675 \begin{bmatrix} 1 & 1 & 1 \\ 1 & 1 & -1 \\ 1 & -1 & -1 \\ 1 & -1 & 1 \end{bmatrix}$$

Wherein, Row 1 of the pre-coding matrix P corresponds to the 1 layer of data of user 1, and rows 2 and 3 corresponds to the 2 layers of data of user 2.

Assume that the bandwidth of the system is 10MHz, 1024 points FFT/IFFT is adopted.

The data of the two users arrives at the pre-coding matrix P respectively after multi-ary coding, symbol partitioning, layer-mapping and modulation. Assume that the length of each of the three layers of data is N, data streams of the 4 channels which with a length of N are output to each antenna ports, where date streams are mapped to corresponding physical time frequency resources and inserted pilot frequency, and then are transmitted after carrying out IFFT.

Assume that the number of receiving antennas at user terminals is $N_{r1}$ = $N_{r2}$ = 2. For each user, signals are synchronized and estimated at the receiving end after having passed channels, and then the received signals from the two antennas are respectively carried out by a FFT.

For user 1, MIMO detection of 16 dimensions is conducted for signals of each sub-carrier frequency and directly outputs multi-dimensional symbol soft information, which is then de-symbol mapped to obtain the symbol likelihood information of GF(16) for multi-ary code decoding.

For user 2, MIMO detection of 64 dimensions is conducted for signals of each sub-carrier frequency and directly outputs multi-dimensional symbol soft information, which is then de-symbol mapped to obtain the symbol likelihood information of GF(64) for multi-ary code decoding.

Decoding can adopt algorithms such as BP, FFT-BP, Log-FFT-BP, MS and EMS, etc. The hard decision outputs the decision symbol after iterative convergence or when the maximum number of iterations is met. Finally, the decision symbol is converted to bit outputs.

**Claims**

1. A method for multi-user multi-ary parallel transmission, comprising the following steps:

   Galois Field, GF($g_i$) multi-ary coding $q_i$-ary symbols in the i-th channel of data among m-channel user data to obtain multi-ary-coded $q_i$-ary symbols, wherein, $q_i = 2^{p_i}$, $1 \leq i \leq m$, and $m > 1$;
   partitioning and mapping $p_i$ bits corresponding to the multi-ary-coded $q_i$-ary symbols to obtain $k_i$ layer bit stream

$$\sum_{j=1}^{k_i} p_{ij} = p_i;$$

   for the i-th channel of data, wherein the j-th layer bit stream contains $p_{ij}$ bits, and $1 \leq j \leq k_i$ and
   modulating and mapping $p_{ij}$ bits which are mapped to the j-th layer bit stream to constellation points, to obtain a user data block for the i-th channel of data, wherein the number of modulated constellation points is $c_{ij} = 2^{p_{ij}}$, and at the same time, data blocks of m users are mapped to L layers by a layer-mapping module, wherein

$$L = \sum_{i=1}^{m} k_i,$$

   and L modulation symbols are obtained after modulation;
   pre-coding the L symbols on dimensions of $N_t \times L$ to output $N_t$ symbols to ports of corresponding $N_t$ transmission antennas.

2. The method of claim 1, wherein for the $p_{ij}$ bits which are mapped to each layer, an appropriate mapping rule is selected to modulate and map the $p_{ij}$ bits to constellations of $c_{ij} = 2^{p_{ij}}$ dimensions;
   wherein, the appropriate mapping rules include:

   each constellation point on the constellation diagram and all its adjacent constellation points are multiplied by all non-zero elements on Galois Field, GF($g_i$) to calculate the distance between them;
   all possible mapping relationships are traversed to the greatest extent, to select the relationship with the longest distance as the final mapping rule.

3. The method of claim 1 or 2, wherein $p_i$ bits corresponding to $q_i$-ary symbols after coding are partitioned and mapped to obtain $k_i$ layer bit stream, comprising :
   p bit vectors presented with $b_1 b_2 \cdots b_p$ bit vectors for each q-ary symbol are partitioned into k layer bit streams, wherein

$$b_{\sum_{s=1}^{j} p_s - p_j + 1} \quad b_{\sum_{s=1}^{j} p_s - p_j + 2} \quad \cdots b_{\sum_{s=1}^{j} p_s},$$

   the bit streams on the j-th layer is                                            $1 \leq j \leq k,$ and are respectively mapped to corresponding layers.

4. The method of claim 1 or 2, wherein when multi-ary codes are sent concurrently by multiple users in multiple cells, the m-channel user data symbols come from multiple cells, and the $N_t$ transmission antennas are obtained by combining antennas of multiple cells for transmission.

5. A device for multi-user multi-ary parallel transmission, comprising:

   multiple Galois Field, GF, multi-ary coding means, each of which conducts ¡ Galois Field, GF($g_i$) multi-ary coding for corresponding i-th channel of data one-channel multi-ary symbols among m-channel user data, to obtain m-channel multi-ary-coded multi-ary symbols, wherein $g_i = 2^{p_i}$, $1 \leq i \leq m$ and $m > 1$;
   multiple partitioning and layer-mapping means for multi-ary symbols, each of which receives one-channel multi-ary-coded multi-ary symbols among the multi-ary-coded m-channel multi-ary symbols which have undergone multi-ary coding from the corresponding Galois Field, GF($g_i$) multi-ary coding means, and partitions and maps multiple bits corresponding to the one-channel multi-ary-coded symbols to obtain a multi-layer bit stream for the one-channel and thus to obtain m multi-layer bit streams;

multiple multi-dimensional modulation means which are used to modulate and map each multi-layer bit stream among the m multi-layer bit streams to corresponding constellation points, as to obtain L modulation symbols

$$L = \sum_{i=1}^{m} k_i ,$$

for m users, wherein, and $K_i$ is the i-th multi-layer of m multi-layers;

pre-coding means which are used to conduct $N_t \times L$ dimension pre-coding of the L symbols to output $N_t$ symbols to ports of corresponding $N_t$ transmission antennas.

6. The parallel transmission device of claim 5, wherein each partitioning and layer mapping means for multi-ary symbols realizes partitioning and layer mapping of multi-ary symbols through the following means:

p bit vectors presented with $b_1 b_2 \cdots b_p$ bit vectors for each multi-ary symbol are partitioned into k-layer bit streams,

$$b_{\sum_{s=1}^{j} p_s - p_j + 1} \quad b_{\sum_{s=1}^{j} p_s - p_j + 2} \quad \cdots b_{\sum_{s=1}^{j} p_s} ,$$

wherein the bit stream on the j-th layer is $1 \leq j \leq k,$ and are respectively mapped to corresponding layers.

7. The device of claim 5 or 6, wherein each of the coding means of the multiple Galois Field, GF, multi-ary conducts Galois Field, GF multi-ary coding for corresponding one-channel data symbols among the m-channel user data symbols in multiple cells, and the $N_t$ transmission antennas are obtained by combining antennas of multiple cells for transmission.

8. A wireless communication method for multi-user multi-ary parallel transmission and reception comprising:

performing the multi-user multi-ary parallel transmission method of any of claims 1 to 4; and further comprising the following steps:

a receiver receiving the i-th user data signal in the m-channel user data signals via $N_i$ receiving antennas, wherein, $1 \leq i \leq m;$

after the i-th user data received is synchronized and balanced, the signal entering a multiple-input-multiple-output (MIMO) detection module for separation of overlapping signals and soft symbol decoding, to obtain the $q_i$-ary symbol likelihood information and take other channels of data as interference;

demapping $q_i$-ary symbol on the $q_i$-ary likelihood information to obtain input symbol likelihood information required for multi-ary decoding;

decoding the likelihood information of the required input to obtain $q_i$-ary symbols; and

converting the $q_i$-ary data symbols to corresponding data bits.

9. A wireless communication system comprising:

the device for multi-user multi-ary parallel transmission of any of claims 5 to 7; and a device for multi-user multi-ary parallel receiving, comprising:

antennas for receiving the i-th user data signal in the m-channel user data signals, wherein, $1 \leq i \leq m;$

means for synchronizing and balancing of the received i-th user data;

means for processing of separation of overlapping signals and symbol soft demodulating of the synchronized and balanced i-th user data , to obtain the $q_i$-ary symbol likelihood information and takes other channels of data as interference;

means for de-mapping $q_i$-ary symbol on the $q_i$-ary likelihood information to obtain the input symbol likelihood information required for multi-ary decoding;

means for decoding the likelihood information of the required input symbols to obtain $q_i$-ary symbols; and

means for converting the $q_i$-ary data symbols into corresponding data bits.

**Patentansprüche**

1. Verfahren zur Mehrbenutzer-mehr-stelligen Parallelübertragung, umfassend die folgenden Schritte:

Galoiskörper-mehr-stelliges Kodieren von $q_i$-stelligen Symbolen im i-ten Kanal von GF($g_i$)-Daten unter m-Kanal-Benutzerdaten, um mehr-stellig kodierte $q_i$-stellige Symbole zu erhalten, wobei $q_i = 2^{p_i}$, $1 \leq i \leq m$ und m>1 gilt;

Partitionieren und Abbilden von $p_i$-Bits, die den mehr-stellig-kodierten $q_i$-stelligen Symbolen entsprechen, um einen $k_i$-Schicht-Bitstrom für den i-ten Datenkanal zu erhalten, wobei der j-te-Schicht-Bitstrom $p_{ij}$-Bits enthält

und 1 <=j<=j<=kj und $\sum_{j=1}^{k_i} p_{ij} = p_i$ gilt;

Modulieren und Abbilden von $p_{ij}$-Bits, die auf den j-ten Schicht-Bitstrom abgebildet werden, auf Konstellationspunkte, um einen Benutzerdatenblock für den i-ten Datenkanal zu erhalten, wobei die Anzahl der modulierten Konstellationspunkte $c_{ij} = 2^{p_{ij}}$ ist, und gleichzeitig Datenblöcke von m Benutzern durch ein Schicht-Abbildungsmodul auf L-Schichten abgebildet werden, wobei $L = \sum_{i=1}^{m} k_i$ ist und L-Modulationssymbole nach der Modulation erhalten werden;

Vorkodierung der L-Symbole auf Dimensionen von $N_t$ x L, um $N_t$-Symbole an Anschlüssen von entsprechenden $N_t$ Übertragungsantennen auszugeben.

2. Verfahren nach Anspruch 1, wobei für die $p_{ij}$ Bits, die auf jede Schicht abgebildet werden, eine geeignete Abbildungsregel ausgewählt wird, um die $p_{ij}$ Bits auf Konstellationen von $c_{ij} = 2^{p_{ij}}$ Dimensionen zu modulieren und abzubilden;

wobei die entsprechenden Abbildungsregeln Folgendes beinhalten:

jeder Konstellationspunkt im Konstellationsdiagramm und alle seine benachbarten Konstellationspunkte werden mit allen nicht-Null-Elementen auf dem Galoiskörper GF($g_i$) multipliziert, um den Abstand zwischen ihnen zu berechnen;

alle möglichen Abbildungsbeziehungen werden im größten Ausmaß durchlaufen, um die Beziehung mit der größten Entfernung als endgültige Abbildungsregel auszuwählen.

3. Verfahren nach Anspruch 1 oder 2, wobei $p_t$ Bits, die $q_i$-stelligen Symbolen nach der Kodierung entsprechen, partitioniert und abgebildet werden, um einen $k_i$-Schicht-Bitstrom zu erhalten, umfassend:

p Bitvektoren, die mit $b_1 b_2 ... b_p$ Bitvektoren für jedes q-stellige Symbol dargestellt werden, werden in k-Schicht-Bitströme aufgeteilt, wobei die Bitströme auf der j-ten Schicht gegeben ist durch $b_{\sum_{s=1}^{j} p_i - p_j + 1}\ b_{\sum_{s=1}^{j} p_i - p_j + 2} \cdots b_{\sum_{i=1}^{j} p_i}$ mit $1 \leq j \leq k$, und jeweils auf entsprechende Schichten abgebildet werden.

4. Verfahren nach Anspruch 1 oder 2, wobei, wenn mehr-stellige Kodes gleichzeitig von mehreren Benutzern in mehreren Zellen gesendet werden, die m-Kanal-Benutzerdatensymbole von mehreren Zellen stammen und die $N_t$ Übertragungsantennen durch Kombinieren von Antennen mehrerer Zellen zur Übertragung erhalten werden.

5. Vorrichtung zur Mehrfachnutzer mehr-stelligen parallelen Übertragung, umfassend:

mehrere Galoiskörper-, GF-, mehr-stellige Kodier-Mittel, von denen jedes Galoiskörper-mehr-stellige Kodierung für den entsprechenden i-ten Datenkanal von einkanaligen mehr-stelligen Datensymbolen GF(gi) unter m-Kanal-Benutzerdaten durchführt, um m-Kanal mehr-stellige kodierte mehrwertige Symbole zu erhalten, wobei $q_i = 2^{p_i}$, $1 \leq i \leq m$ und m> 1 gilt;

mehrere Partitionierungs- und Schicht-Abbildungs-Mittel für mehr-stellige Symbole, von denen jedes einkanalige mehr-stellig kodierte mehr-stellige Symbole unter den mehr-stellig-kodierten m-Kanal-mehr-stelligen Symbolen, die einer mehr-stelligen Kodierung von den entsprechenden Galoiskörper GF($g_i$)-mehr-stelligen Kodier-Mitteln unterzogen wurden, empfängt, und mehrerer Bits, die den einkanaligen mehr-stellig kodierten Symbolen entsprechen, partitioniert und abbildet, um einen mehrschichtigen Bitstrom für den einkanaligen Kanal und damit m-Mehrschicht-Bitströme zu erhalten;

mehrere mehrdimensionale Modulationsmittel, die verwendet werden, um jeden mehrschichtigen Bitstrom unter den m mehrschichtigen Bitströmen auf entsprechende Konstellationspunkte zu modulieren und abzubilden, um L-Modulationssymbole für m Benutzer zu erhalten, wobei $L = \sum\limits_{i}^{m} k_i$ .. und $K_i$ die i-te Mehr-Schicht von m-Mehr-Schichten ist;

Vorkodiermittel, die verwendet werden, um eine Vorkodierung der $N_t$ x L-Dimensionen der L-Symbole durchzuführen, um $N_t$-Symbole an Ports entsprechender $N_t$ Übertragungsantennen auszugeben.

**6.** Parallele Übertragungsvorrichtung nach Anspruch 5, wobei jedes der Partitionierungs- und Schichtabbildungsmittel für mehr-stellige Symbole eine Partitionierung und Schichtabbildung von mehr-stelligen Symbolen durch die folgenden Mittel realisiert:

p Bitvektoren, die mit $b_1 b_2 ... b_p$ Bitvektoren für jedes mehr-stellige Symbol dargestellt werden, werden in k-Schicht-Bitströme aufgeteilt, wobei der Bitstrom auf der j-ten Schicht gegeben ist durch $b_{\sum\limits_{s=1}^{j} p_s - p_j + 1} \quad b_{\sum\limits_{s=1}^{j} p_s - p_j + 2} \quad \cdots b_{\sum\limits_{s=1}^{j} p_s}$ , wobei $1 \leq j \leq k$ ist, und jeweils auf entsprechende Schichten abgebildet werden.

**7.** Die Vorrichtung nach Anspruch 5 oder 6, wobei jedes der Kodierungsmittel der Vielzahl von Galois-Körper-, GF-, mehr-stellige Galois-Körper-, GF-mehr-stellige-Kodierung für entsprechende Einkanal-Datensymbole unter den m-Kanal-Benutzerdatensymbolen in mehreren Zellen ausführt, und wobei die $N_t$ Sendeantennen durch Kombinieren von Antennen mehrerer Zellen zur Übertragung erhalten werden.

**8.** Drahtloses Kommunikationsverfahren für Mehrbenutzer mehr-stelliges paralleles Senden und Empfangen, umfassend:

Durchführen des Mehrbenutzer mehr-stelligen Parallelübertragungsverfahrens nach einem der Ansprüche 1 bis 4; und
ferner umfassend die folgenden Schritte:

ein Empfänger, der das i-te Nutzdatensignal in den m-Kanal-Nutzdatensignalen über $N_i$-Empfangsantennen empfängt, wobei $1 \leq i \leq m$ ist;
nachdem die empfangenen i-ten Nutzdaten synchronisiert und abgeglichen sind, wird das Signal eingeben in ein Multiple-Input-Multi-Output (MIMO)-Erkennungsmodul für die Trennung von überlappenden Signalen und Soft-Symbol-Dekodierung, um die $q_i$-stelligen Symbol-Wahrscheinlichkeitsinformationen zu erhalten und Betrachten der anderen Datenkanäle als Interferenz;
Rück-Abbilden des $q_i$-stelligen-Symbols auf die $q_i$-stellige Wahrscheinlichkeitsinformationen, um Informationen über die Wahrscheinlichkeit des Eingangssymbols zu erhalten, die für die mehr-stellige-Dekodierung erforderlich sind; Dekodieren der Wahrscheinlichkeitsinformationen der erforderlichen Eingabe zum Erhalten von $q_i$-stelligen Symbolen; und

Umwandeln der $q_i$-stelligen Datensymbole in entsprechende Datenbits.

**9.** Drahtloses Kommunikationssystem, umfassend:

Die Vorrichtung zur Mehrbenutzer- mehr-stelligen parallelen Übertragung von einem der Ansprüche 5 bis 7; und
eine Vorrichtung zum Mehrbenutzer-Parallelempfang, umfassend:

Antennen zum Empfangen des i-ten Benutzerdatensignals in den m-Kanal-Benutzerdatensignalen, wobei $1 \leq i \leq m$ gilt;
Mittel zum Synchronisieren und Abgleichen der empfangenen i-ten Nutzdaten;

Mittel zum Verarbeiten der Trennung von überlappenden Signalen und der Symbol-Softdemodulation der synchronisierten und abgeglichen i-ten Nutzdaten, um die $q_i$-stelligen Symbolwahrscheinlichkeitsinformationen zu erhalten und Betrachten andere Datenkanäle als Interferenz;

Mittel zum Rück-Abbilden des $q_i$-stelligen-Symbols von der $q_i$-stelligen Wahrscheinlichkeitsinformation, um die für die mehr-stellige Dekodierung erforderlichen Informationen über die Wahrscheinlichkeit des Eingangssymbols zu erhalten;

Mittel zum Dekodieren der Wahrscheinlichkeitsinformationen der erforderlichen Eingangssymbole, um $q_i$-Stellige Symbole zu erhalten; und

Mittel zum Umwandeln der $q_i$-stelligen Datensymbole in entsprechende Datenbits.

**Revendications**

1. Procédé de transmission en parallèle multi-aires multi-utilisateurs, comprenant les étapes suivantes :

le codage multi-aires à Champ de Galois, GF($q_i$), de symboles $q_i$-aire dans le i-ème canal de données parmi des données utilisateur de m canaux pour obtenir des symboles $q_i$-aire à codage multi-aires, où, $q_i = 2^{pi}$, $1 \leq i \leq m$, et m > 1 ;

le partitionnement et le mappage de $p_i$ bits correspondant aux symboles $q_i$-aire à codage multi-aires pour obtenir un $k_i$ train de bits de couches pour le i-ème canal de données, où le j-ième train de bits de couches contient $p_{ij}$

$$\sum_{j=1}^{k_i} p_{ij} = p_i$$

bits, et $1 \leq j \leq k_i$ et

la modulation et le mappage des $p_{ij}$ bits qui sont mappés sur le j-ième train de bits de couches en points de constellation, pour obtenir un bloc de données utilisateur pour le i-ème canal de données,

dans lequel le nombre de points de constellation modulés est $c_{ij} = 2^{pij}$, et, simultanément, des blocs de données de m utilisateurs sont mappés sur L couches par un module de mappage de couches,

$$L = \sum_{i=1}^{m} k_i$$

dans lequel et L symboles de modulation sont obtenus après la modulation ;

le pré-codage des L symboles sur des dimensions de $N_t \times L$ pour délivrer en sortie $N_t$ symboles à des ports de $N_t$ antennes de transmission correspondantes.

2. Procédé de la revendication 1, dans lequel, pour les bits $p_{ij}$ qui sont mappés sur chaque couche, une règle de mappage appropriée est sélectionnée pour moduler et mapper les $p_{ij}$ bits en constellations de dimensions $c_{ij} = 2^{pij}$ ; dans lequel, les règles de mappage appropriées comportent :

chaque point de constellation sur le diagramme de constellation et tous ses points de constellation adjacents sont multipliés par tous les éléments non nuls sur le Champ de Galois, GF($q_i$) pour calculer la distance qui les sépare ;

toutes les relations de mappage possibles sont traversées dans la plus grande mesure possible, pour sélectionner la relation avec la distance la plus longue en tant que règle de mappage finale.

3. Procédé de la revendication 1 ou 2, dans lequel les $p_i$ bits correspondant aux symboles $q_i$-aire après le codage, sont partitionnés et mappés pour obtenir un train de bits de couches $k_i$, comprenant :

p vecteurs de bits présentés avec $b_1 b_2 ... b_p$ vecteurs de bits pour chaque symbole q-aire sont partitionnés en trains de bits de k couches, où les trains de bits sur la j-ième couche représentent $b_{\sum_{s=1}^{j} p_s - p_j + 1} \, b_{\sum_{s=1}^{j} p_s - p_j + 2} \, \cdots b_{\sum_{s=1}^{j} p_s}$, $1 \leq j \leq k$, et sont respectivement mappés sur des couches correspondantes.

4. Procédé de la revendication 1 ou 2, dans lequel, lorsque des codes multi-aires sont envoyés simultanément par plusieurs utilisateurs dans plusieurs cellules, les symboles de données utilisateur de m canaux proviennent de plusieurs cellules, et les $N_t$ antennes de transmission sont obtenues en combinant des antennes de plusieurs cellules pour la transmission.

5. Dispositif de transmission en parallèle multi-aires multi-utilisateurs, comprenant :

plusieurs moyens de codage multi-aires à Champ de Galois, GF, dont chacun effectue un codage multi-aires à Champ de Galois, GF($q_i$), pour des symboles multi-aires monocanal correspondant d'un i-ème canal de données parmi des données utilisateur de m canaux, pour obtenir des symboles multi-aires à codage multi-aires de m canaux, où $q_i = 2^{pi}$, $1 \leq i \leq m$ et m > 1 ;

plusieurs moyens de partitionnement et de mappage de couches pour des symboles multi-aires, dont chacun reçoit des symboles multi-aires à codage multi-aires monocanal parmi les symboles multi-aires de m canaux à codage multi-aires qui ont subi un codage multi-aires à partir des moyens de codage multi-aires à Champ de Galois, GF(q$_i$), correspondants et partitionne et mappe plusieurs bits correspondant aux symboles à codage multi-aires monocanal pour obtenir un train de bits multi-couches pour le seul canal et pour obtenir ainsi m tarins de bits multi-couches ;

plusieurs moyens de modulation multi-dimensionnels qui sont utilisés pour moduler et mapper chaque train de bits multi-couches parmi les m trains de bits multi-couches sur des points de constellation correspondants, de

$$L = \sum_{i=1}^{m} k_i$$

manière à obtenir L symboles de modulation pour m utilisateurs, où, et K$_i$ est la i-ème multi-couches de m multi-couches ;

des moyens de pré-codage qui sont utilisés pour effectuer un pré-codage de dimension $N_t \times L$ des L symboles pour délivrer en sortie N$_t$ symboles à des ports de N$_t$ antennes de transmission correspondantes.

6. Dispositif de transmission en parallèle de la revendication 5, dans lequel chaque moyen de partitionnement et de mappage de couches pour des symboles multi-aires réalise le partitionnement et la mappage de couches de symboles multi-aires par les moyens suivants :

p vecteurs de bits présentés avec b$_1$b$_2$...b$_p$ vecteurs de bits pour chaque symbole multi-aires sont séparés en trains

$$b_{\sum_{s=1}^{} p_s - p_j + 1} \quad b_{\sum_{s=1}^{} p_s - p_j + 2} \quad \cdots b_{\sum_{s=1}^{} p_s} \quad ,$$

de bits de k couches, où les trains de bits sur la j-ième couche sont $1 \leq j \leq k$, et sont mappés respectivement sur des couches correspondantes.

7. Dispositif de la revendication 5 ou 6, dans lequel chacun des moyens de codage du multi-aires à Champ de Galois, GF, effectue un codage multi-aires à Champ de Galois, GF pour des symboles de données monocanal correspondants parmi les symboles de données utilisateur de m canaux dans plusieurs cellules et les N$_t$ antennes de transmission sont obtenues en combinant des antennes de plusieurs cellules pour la transmission.

8. Procédé de communication sans fil pour une transmission et une réception en parallèle multi-aires multi-utilisateurs comprenant le fait :

d'exécuter le procédé de transmission en parallèle multi-aires multi-utilisateurs de l'une des revendications 1 à 4 ; et

comprenant en outre les étapes suivantes :

la réception, par le biais d'un récepteur, du i-ème signal de données utilisateur dans les signaux de données utilisateur de m canaux via N$_i$ antennes de réception, où, $1 \leq i \leq m$ ;

après la synchronisation et l'équilibrage des i-èmes données utilisateur reçues, l'entrée du signal dans un module de détection à entrées multiples à sorties multiples (MIMO) pour la séparation de signaux en chevauchement et le décodage de symboles logiciels, pour obtenir les informations de vraisemblance de symbole q$_i$-aire et pour prendre d'autres canaux de données en tant qu'interférence ;

le démappage d'un symbole q$_i$-aire sur les informations de vraisemblance q$_i$-aire pour obtenir des informations de vraisemblance de symbole d'entrée nécessaires au décodage multi-aires ;

le décodage des informations de vraisemblance des symboles d'entrée nécessaires pour obtenir des symboles q$_i$-aire ; et

la conversion des symboles de données q$_i$-aire en bits de données correspondants.

9. Système de communication sans fil comprenant :

le dispositif de transmission en parallèle multi-aires multi-utilisateurs de l'une des revendications 5 à 7 ; et

un dispositif de réception en parallèle multi-aires multi-utilisateurs, comprenant :

des antennes pour recevoir le i-ème signal de données utilisateur dans les signaux de données utilisateur de m canaux, où, $1 \leq i \leq m$ ;

des moyens pour synchroniser et équilibrer les i-èmes données utilisateur reçues ;

des moyens pour traiter la séparation de signaux en chevauchement et la démodulation de symboles logiciels des i-èmes données utilisateur synchronisées et équilibrées, pour obtenir les informations de vraisemblance de symbole $q_i$-aire et pour prendre d'autres canaux de données en tant qu'interférence ;

des moyens pour dé-mapper un symbole $q_i$-aire sur les informations de vraisemblance $q_i$-aire pour obtenir les informations de vraisemblance de symbole d'entrée nécessaires au décodage multi-aire ;

des moyens pour décoder les informations de vraisemblance des symboles d'entrée nécessaires pour obtenir des symboles $q_i$-aire ; et

des moyens pour convertir les symboles de données $q_i$-aire en bits de données correspondants.

Figure 1

Figure 2

16QAM Signal Points
and Various Mapping
Methods      Blue: Gray mapping
Red: QCM optimal mapping

● S3
(0010)
(0011)

● S2
(0011)
(0101)

● S1
(0001)
(1011)

● S0
(0000)
(0110)

● S7
(0110)
(1000)

● S6
(0111)
(0010)

● S5
(0101)
(0001)

● S4
(0100)
(1100)

0

● S11
(1110)
(0111)

● S10
(1111)
(1010)

● S9
(1101)
(0100)

● S8
(1100)
(1001)

● S15
(1010)
(0000)

● S14
(1011)
(1111)

● S13
(1001)
(1101)

● S12
(1000)
(1110)

Figure 3

Figure 4

Figure 5

EP 2 391 020 B1

Figure 6

20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008045001 A

- WO 2008082277 A2

### Non-patent literature cited in the description

- **G. CAIRE ; G. TARICCO ; E. BIGLIERI.** Bit-Interleaved Coded Modulation. *IEEE Trans. Inf. Theory,* May 1998, vol. 44 (3
- **M.C. DAVEY ; D. MACKAY.** Low-density parity check codes over GF (q). *IEEE Commun. Lett.,* June 1998, vol. 2, 165-167
- **X. LI ; M. R. SOLEYMANI ; J. LODGE ; P. S. GUINAND.** Good LDPC codes over GF (q) for bandwidth efficient transmission. *SPAWC 2003,* June 2003, 95-99

- **R. PENG ; R.-R. CHEN.** Design of nonbinary LDPC codes over GF(q) for multiple-antenna transmission. *MILCOM'06,* November 2006
- **D. DECLERCQ ; M. FOSSORIER.** Decoding Algorithms for Nonbinary LDPC Codes over GF (q). *IEEE Trans. On Comm.,* April 2007, vol. 55, 633-643